# EUROPEAN PATENT APPLICATION

(11) **EP 2 312 890 A1**
(43) Date of publication of application: **20.04.2011**
(21) Application number: 09305987.1
(22) Date of filing: 15.10.2009
(51) Int. Cl.: H04W 60/00, H04W 76/02, H04W 84/12

(54) **IP packet downlink routing in I-WLAN via multiple PDGS**

(71) Applicant: FRANCE TELECOM, 75015 Paris (FR)
(72) Inventor: Ahmed, Tansir, London W45XS (GB); Barankanira, Delphin, 92130 Issy les Moulineaux (FR)
(74) Representative: Hassine, Albert

(57) **Abstract**

Data packet routing method for transmitting a data packet (p) from a server (HA) to an user equipment (UE), wherein the data packet (p) is transmitted (150) through a forwarding data packet gateway (PDGi) selected among a plurality of packet data gateways (PDG1, PDG2), wherein the forwarding data packet gateway (PDGi) is selected (140) in accordance with flow-level routing information stored in the server (HA) and IP flow identifying data (FIDi) recovered (130) from the content of said data packet (p). The present invention relates also to a computer program product comprising instructions for implementing data packet routing method.

## Description

### FIELD OF THE INVENTION

The present invention relates to the downlink routing of IP packets in a network, particularly in an I-WLAN network using multiple packet data gateways for the routing of multiple IP flows.

### BACKGROUND OF THE INVENTION

The eighth release of the third generation partnership project, also referred to as 3GPP Rel-8, has introduced mobility enhancements to the architecture of intelligent wireless local area networks (the so-called I-WLAN) in order to support session continuity for any application between 3GPP and I-WLAN accesses.

However, it is still not possible for a subscriber to communicate using 3GPP and I-WLAN accesses simultaneously. The subscriber can establish a single Packet Data Network (also referred to as PDN) connection or multiple simultaneous PDN connections in I-WLAN, but all the traffic exchanged by the subscriber, regardless of the PDN connection it belongs to, is routed through the same access system.

Devices with multiple interfaces (e.g. 3GPP and WiFi) are now commonly available and the set of applications running in the mobile devices is diversifying with some applications suited to run over 3GPP access systems and other applications well suited to run over WiFi (e.g. FTP transfer via WiFi in parallel to VoIP over 3GPP).

In these circumstances, it has become important to allow dynamic allocation of different IP flows to different access systems as per their requirements, so that the user experience can be enhanced while the connectivity cost for the operator can be optimized. Recently, studies related to multi access PDN connectivity and IP flow mobility in I-WLAN has gathered pace, which is raising new issues that need to be addressed.

One of these identified issues is the routing of IP flows using the same I-WLAN access, but via multiple packet data gateways (also referred to as PDGs).

According to the 3GPP TS 23.234 technical specification ("3GPP System to Wireless Local Area Network (WLAN) Interworking; System Description (Release 8)", Dec. 2008) and 3GPP TS 23.327 technical specification ("Mobility between 3GPP-Wireless Local Area Network (WLAN) Interworking and 3GPP Systems (Release 8)", March 2009), the user equipment discovers the appropriate packet data gateway associated with a requested service by resolving the Wireless Access Point Name (W-APN) through the DNS query.

In these technical specifications, the user equipment is not restricted to access a packet data network through only one packet data gateway. Therefore, there is a possibility that the user equipment may get connected to multiple packet data gateways simultaneously via the same I-WLAN network interface. Currently, in the 3GPP TS 23.234 or TS 23.327 technical specifications, there is no directive how to handle such situation where the UE has multiple IP flows using the same I-WLAN access, but via multiple packet data gateways.

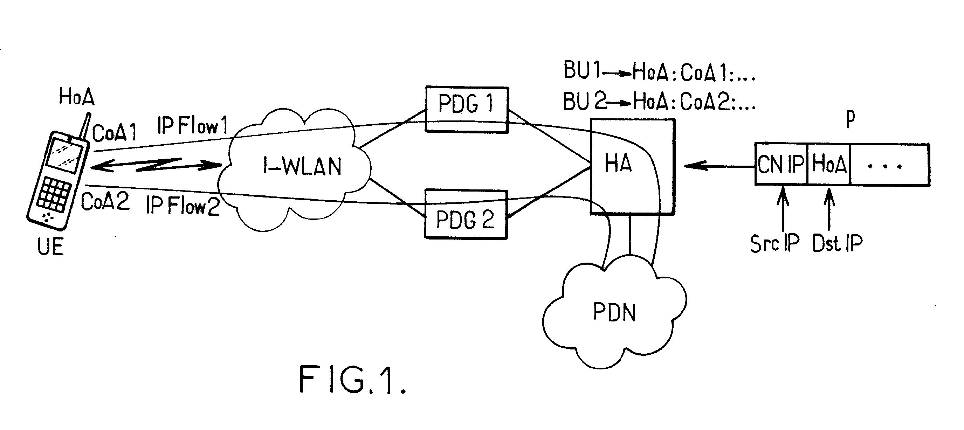

The problem associated with I-WLAN PDN connections via multiple packet data gateways is illustrated in figure 1.

In the scenario shown on this figure 1, a user equipment UE has two active IP flows (IP flows 1 and 2, each representing a specific service) using the same I-WLAN access, but these two IP flows use separate packet data gateways while accessing the same packet data network. IP flow 1 uses packet data gateway PDG1 to access the packet data network in the uplink direction, whereas IP flow 2 uses packet data gateway PDG2 to access the packet data network in the uplink direction.

The packet data network is accessed via a home agent (also referred to as HA) to which the user equipment UE registers the IP flows by sending binding update messages BU1, BU2 containing some information such as the user equipment Home Address HoA and its Care-of Address parameters CoA1, CoA2.

Therefore, on the uplink, the user equipment UE knows the exact packet data gateway to access for a specific service according to 3GPP TS 23.234 technical specification.

On the other hand, a downlink packet p transmitted from the correspondent node to the Home Agent (also referred to as HA) contains the Correspondent Node IP (CN IP) address and the user equipment Home Address HoA as the source and destination IP addresses respectively, as shown in figure 1.

The Home Agent HA support multiple bindings, for instance by using the DSMIPv6 extension proposed in the IETF draft "Flow Bindings in Mobile IPv6 and Nemo Basic Support", April 2009. The shortcoming of the existing specifications is that using the information contained in the downlink data packet p and/or the Home Agent Binding Cache, the Home Agent HA cannot route individual IP packets on the downlink via the appropriate packet data gateways. In other words, the home Agent HA cannot ensure the downlink routing of IP flow 1 via the packet data gateway PDG1 and IP flow 2 via the packet data gateway PDG2.

This can result in downlink IP packets belonging to IP flow 1 being routed via packet data gateway PDG2, whereas they should be routed via packet data gateway PDG1, or vice versa.

Such a situation is detrimental to effective and reliable routing of IP packets, as according to the established IPsec security association between the user equipment and a specific packet data gateway, the same packet data gateway has to be used for both uplink and downlink directions of the same IP flow. Otherwise, the IP packets are rejected by the user equipment.

Apart from the security consideration, the I-WLAN service provider may want to use dedicated packet data gateways for specific services for increased performance and reliability, for example, one packet data gateway for corporate customers accessing secured intranet, and the other for general purpose I-WLAN service access. Thus, the provider has the flexibility not to stick with a single packet data gateway to handle enormous amount of data. It can prioritize services, be flexible with network configuration, and assign dedicated packet data gateways to specific important services to optimize user experience as well as network planning and resource utilization. This efficient network management goal is achievable only if the same PDG is used for both uplink and downlink directions of the same IP flow.

It is thus an object of the present invention to overcome the above-identified difficulties and disadvantages by proposing a routing method for downlink IP packets able to select the same packet data gateway as the one used for uplink direction.

### SUMMARY OF THE INVENTION

According to a first aspect of the present invention, there is provided a data packet routing method for transmitting a data packet from a server to an user equipment, wherein the data packet is transmitted through a forwarding data packet gateway selected among a plurality of packet data gateways, characterised in that the forwarding data packet gateway is selected in accordance with flow-level routing information stored in the server and IP flow identifying data recovered from the content of said data packet.

Such a data packet routing method provides a number of advantages, especially for an I-WLAN service provider. For example, the I-WLAN service provider may want to use dedicated packet data gateways for specific services for increased performance and reliability, for instance, one packet data gateway for corporate customers accessing secured intranet, and the other for general purpose I-WLAN service access. Thus, the provider has the flexibility not to stick with a single packet data gateway to handle enormous amount of data. It can prioritize services, be flexible and efficient with network configuration and management, and assign dedicated packet data gateways to specific important services to optimize user experience as well as network planning and resource utilization.

Preferably, the flow-level routing information is stored in the server during an IP flow registration step initiated by the user equipment. This provides the advantage that the user equipment has control on the IP flow downlink routing via the flow-level routing information.

As an additional advantage, the user equipment has the flexibility of initiating multiple IP flows via the same I-WLAN interface to access multiple services as desired by the user, and still be sure that the data traffic will be routed through the desired packet data gateways at all time.

In an advantageous embodiment, the IP flow registration step comprises, for each one of a plurality of IP flows to be registered in the server, the transmission from the user equipment to the server of a respective binding update message which comprises the flow-level routing information. That way, the user equipment uses an already existing message, and does not need to use a newly created type of message, to update the downlink routing of IP packets at the server.

In a preferred embodiment wherein the flow-level routing information comprises IP flow identifying data associated with packet data gateway identifying data for each IP flow, the forwarding data packet gateway is selected in accordance with the packet data gateway identifying data matching the IP flow identifying data recovered from the data packet content. This embodiment allows a fast processing of the packet data gateway selection.

In particular, when a DSMIPv6 protocol is used by the user equipment and the server, the packet data gateway identifying data is included into the flow description field of the respective binding update message according to a DSMIPv6 extension.

In another preferred embodiment wherein the flow-level routing information comprises IP flow identifying data associated with Care-of Address data for each IP flow, the server selects the forwarding data packet gateway in accordance with the Care-of Address data matching the IP flow identifying data recovered from the data packet content. With such an embodiment, the usual binding update messages for registering the IP flows can be used without having to insert additional information in one of their data fields.

Advantageously, when each packet data gateway among the plurality of packet data gateways is associated to at least one remote IP address, the selected forwarding data packet gateway is the data packet gateway associated with an IP address matching the Care-of Address data corresponding to the IP flow identifying data recovered from the data packet content. This embodiment lowers the need for memory resources locally in the server.

In particular, the Care-of Address data can be assigned by a packet data gateway selected by the user equipment during I-WLAN service access with W-APN.

In another preferred embodiment, the IP flow identifying data is recovered by filtering at least one specific parameter contained in the data packet. It is therefore unnecessary to include additional information in the incoming downlink data packets.

In a specific embodiment wherein said data packet comprises a source IP address and/or subnet mask, a destination IP address and/or subnet mask, a source port, a destination port and a protocol number, the IP flow identifying data is recovered by filtering at least these five parameters. The IP flow of the incoming downlink data packets can be identified easily when using these five parameters.

According to a second aspect of the present intention, there is provided a network server for forwarding a downlink data packet to a forwarding data packet gateway, wherein the network server comprises memorising means for storing flow-level routing information received from a user equipment, flow identifying means for recovering IP flow identifying data from the content of said downlink data packet and selecting means for selecting the forwarding data packet gateway among a plurality of forwarding packet data gateways, wherein the network server is able to carry out the steps of a data packet routing method as above.

According to a third aspect of the present invention, there is provided a network system comprising the above-mentioned network server, a plurality of packet data gateways connected to said network server and at least one user equipment communicating with at least two active packet data gateways among the plurality of packet data gateways, wherein the user equipment is able to transmit flow-level routing information to the network server through one of the at least two active packet data gateways and to receive a downlink data packet from the network server via this active packet data gateway selected by the network server (HA).

According to a fourth aspect of the present intention, there is provided a computer program product for implementing the above-mentioned data packet routing method, when loaded and run on computer means of a network element.

### BRIEF DESCRIPTION OF THE DRAWINGS

Other features and advantages of the invention will become apparent from the following description of non-limiting exemplary embodiments, with reference to the appended drawings, in which:
- Figure 1, already discussed, shows a networking system of the prior art where it is impossible to ensure the selection, on the downlink direction of a specific IP flow, of the same packet data gateway as the one used for the uplink direction of the specific IP flow;
- Figure 2 shows a downlink IP packet routing method system in accordance with the present invention;
- Figures 3A and 3B show respectively a networking system and a downlink IP packet routing method in accordance with a first embodiment of the present invention; and
- Figures 4A and 4B show respectively a networking system and a downlink IP packet routing method in accordance with a second embodiment of the present invention.

### DETAILED DESCRIPTION OF EMBODIMENTS OF THE INVENTION

Next some embodiments of the present invention are described in more detail with reference to the attached figures.

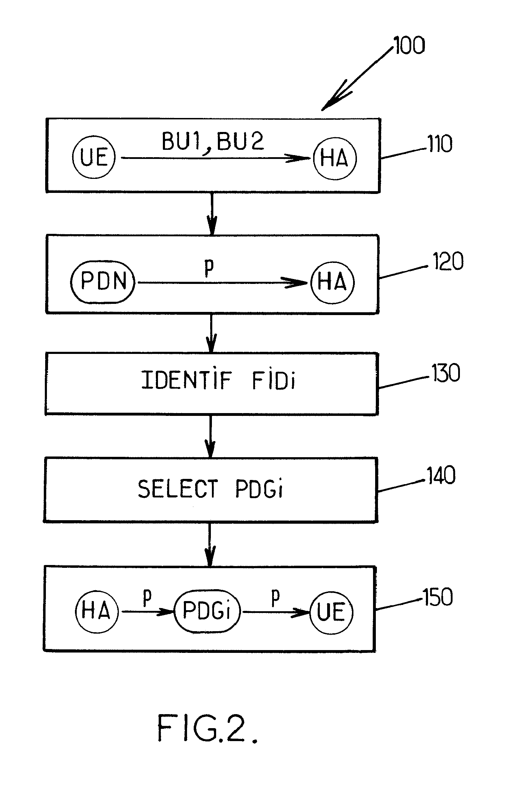

Figure 2 illustrates a downlink IP packet routing method 100 according to the present invention.

In this routing method, a first registration step 110 occurs, wherein for each IP flow activated by a user equipment UE, a binding update message is sent to a server, in the present case a home agent HA connected to a PDN network. In a non-limiting example with two activated IP flows IP flow 1 and IP flow 2 respectively using packet data gateways PDG1 and PDG2 for the uplink direction, two binding update messages BU1 and BU2 corresponding respectively to each of these two flows are sent to the home agent HA. Of course, any number of IP flows can be registered in a similar way.

Such binding messages BU1, BU2 contain flow-level routing information which allows associating IP flow identifying data FIDi with the specific packet data gateway PDGi used for the uplink direction of the specific IP flow. In the present case, this flow-level routing information contains IP flow identification data FID1 and FID2 respectively for identifying the first IP flow 1 routed via packet data gateway PDG1 and the second IP flow 2 routed via packet data gateway PDG2.

Such flow-level routing information is stored in the home agent HA, in order to be used later when incoming downlink data packets pertaining to one of the registered IP flow are received by the home agent HA.

Then, during a packet reception step 120, an incoming downlink IP data packet p, similar to the one shown in figure 1, is received by the home agent HA from the PDN network. Such a data packet p contains a certain number of different parameters such as, for instance, the remote IP address/subnet mask, local and remote port range, protocol number, IPsec Security Parameter Index SPI, IPv4 Type of Service TOS parameter, IPv6 Traffic Class and flow label.

Some of these parameters are used by the Home Agent HA, during a flow identification step 130, to derive the IP flow identifying data FIDi which identifies IP flow to which the incoming data packet p pertains. For instance, the home agent HA can filter chosen parameters among the data packet parameters in order to derive the identity of IP flow of the packet p, and thus the corresponding IP flow identifying data FIDi.

For instance, the home agent HA can use as packet filter a combination of the five following parameters: source and destination IP addresses/subnet masks, source and destination ports and protocol number. The choice of parameters to be used as a packet filter depends on the parameters used as IP flow identifying data FIDi. In the present case, the combination of the aforementioned five parameters is also used as IP flow identifying data FIDi.

After having recovered the IP flow identifying data FIDi of the incoming downlink data packet p, the home agent HA carries out a packet data gateway selection step 140, wherein the packet data gateway PDGi used on the uplink by the same IP flow as for the downlink packet p is selected by the home agent HA. Such a packet data gateway selection step 140 is performed by using the flow-level routing information stored during the registration step 110 in order to retrieve the stored packet data gateway identifying data PDGi matching the recovered IP flow identifying data FIDi of the data packet p.

Once the correct packet data gateway PDGi is selected, data packet p can then be routed to the user equipment UE, via the selected packet data gateway PDGi, during a packet forwarding step 150.

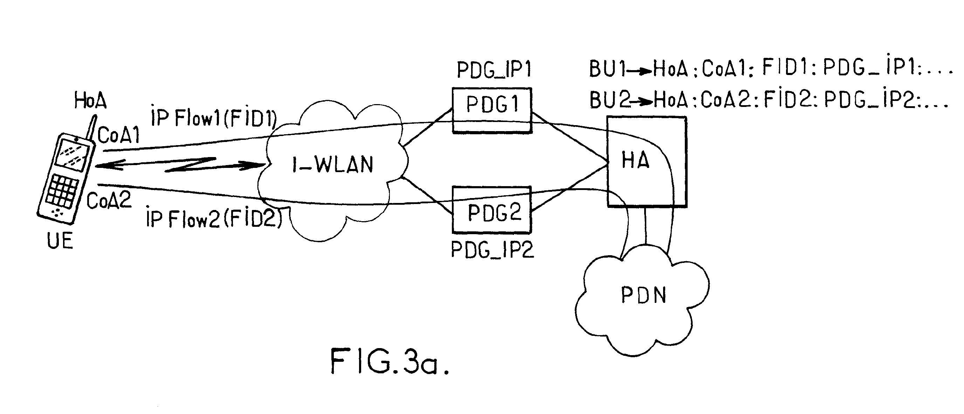

Figure 3A depicts a network system using a downlink IP packet routing method in accordance with a first embodiment of the present invention.

In this first embodiment, a DSMIPv6 extension is used that enables flow level binding.

According to the 3GPP technical specification TS 23.327, the DSMIPv6 protocol (which stands for Dual Stack Mobile IPv6) is deployed for mobility management in I-WLAN mobility architecture. A DSMIPv6 extension is proposed in IETF MEXT WG, "Flow Bindings in Mobile IPv6 and Nemo Basic Support", Internet Draft (work in progress), April 2009) to enable flow level binding in the Home Agent HA. The first embodiment of the downlink IP packet routing method uses this extension to solve the problem of routing individual downlink IP flows to individual packet data gateways.

As it can been on figure 3A, the user equipment UE sends Binding Update messages BU1 and BU2 to the home agent HA for registering each IP flow in accordance with the 3GPP TS 23.327 technical specification. These binding update messages contain a certain number of information and comprise flow-level routing information for the purpose of the present invention. For each IP flow, this flow-level routing information comprises at least an IP flow identifying data, referred to as FIDi, and flow description data, according to the DSMIPv6 extension.

Within the flow description data, the user equipment UE includes the IP address of the packet data gateway PDGi supposed to be used by the home agent HA to route that specific IP flow (e.g. PDG1 for IP flow 1 or PDG2 for IP flow 2).

In the example of figure 3A, this means that a first binding update message BU1 comprises IP flow identifying data FID1 for identifying IP flow 1 as well as the IP address PDG_IP1 of packet data gateway PDG1 in its flow description field. Similarly, binding update message BU2 comprises IP flow identifying data FID2 for identifying IP flow 2 as well as the IP address PDG_IP2 of packet data gateway PDG2 in its flow description field.

Other usual information, such as the Care-of Address CoA and the user equipment home address HoA, can also be included in these binding update messages BU1, BU2.

These parameters are stored in the home agent HA. A typical Binding Cache applicable to this first embodiment is shown in the following Table 1:

**Table 1: Binding Cache in Home Agent HA according to the first embodiment**

| **Care-of Address** | **Home Address** | **Flow Identifier** | **Flow Description** | ... |
|---|---|---|---|---|
| CoA1 | HoA | FID1 | PDG_IP1 | ... |
| CoA2 | HoA | FID2 | PDG_IP2 | ... |
| ... | ... | ... | ... | ... |

In Table 1, the parameters pertaining to binding update message BU1 are stored in the first line, the parameters pertaining to binding update message BU2 are stored in the second line, and so on. When receiving an incoming downlink packet p from the Packet Data Network PDN, the home agent HA derives the IP flow identifying data FIDi corresponding to the data packet p by filtering some of its parameters which indentify the IP flow to which the packet p belongs. The home agent HA then looks into the Binding Cache using this IP flow identifying data FIDi as an indicator to find out the packet data gateway IP address PDG_IPi matching the IP flow identifying data FIDi and indicating to which packet data gateway PDGi the data packet p should be forwarded to.

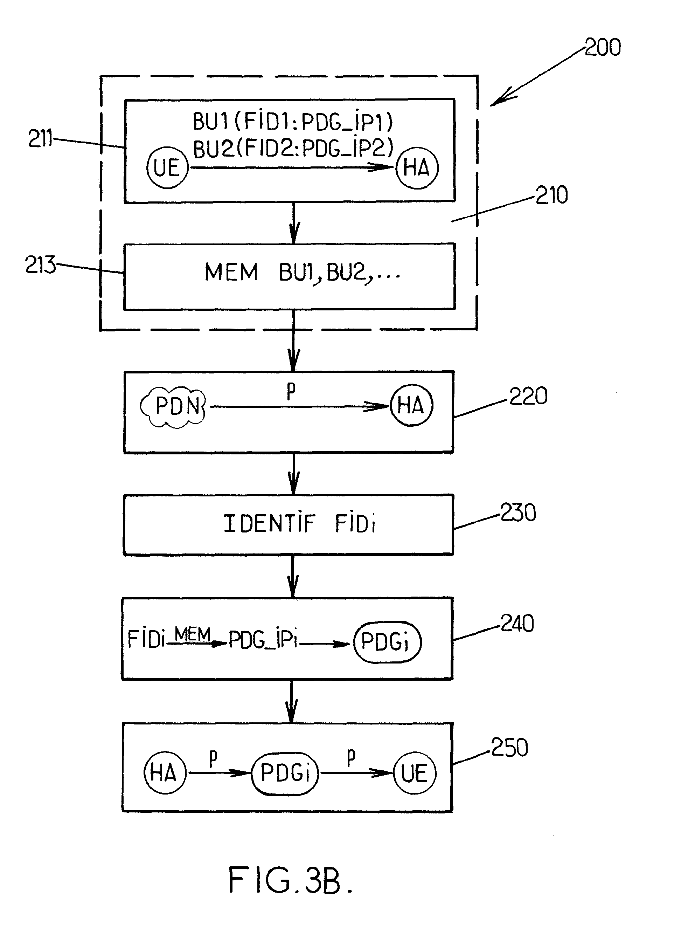

Figure 3B illustrates a downlink IP packet routing method 200 in accordance with a first embodiment of the present invention; and

In this routing method 200, as explained above in relation to figure 3A, flow-level routing information is stored in the home agent HA for each IP flow during an IP flow registration step 210.

This registration step 210 comprises a binding update message transmission sub-step 211 where binding update messages BU1 and BU2 are sent from the user equipment UE to the home Agent HA. In this first embodiment, each binding update message BUi comprises at least an IP flow identifying data FIDi, for identifying the IP flow to be registered within the home agent HA, and an associated packet data gateway identifying data PDG_IPi, for identifying the packet data gateway used on the uplink by the associated IP flow identified by FIDi.

The registration step 210 further comprises a flow-level routing information memorization sub-step 213 wherein the flow-level routing information comprised in the binding messages BU1 and BU2 is stored in the home agent HA, in order to be used later for routing incoming downlink data packets. Such flow-level routing information can be stored, for instance, in the home agent HA binding cache.

Once the different IP flows are registered, the home agent HA is ready to receive an incoming downlink data packet p during a packet reception step 220 similar to the above-discussed packet reception step 120.

When this happens, the home agent HA recovers from at least some of the parameters included in the received data packet p the IP flow identifying data FIDi during a flow identification step 230 similar to the above-discussed flow identification step 130.

Using this IP flow identifying data FIDi, the home agent HA looks for the corresponding packet data gateway PDGi to be used for forwarding the data packet p to the user equipment UE, during a packet data gateway selection step 240.

For that purpose, the home agent HA can refer to its binding cache as illustrated in Table 1 and looks for the packet data gateway identifying data PDG_IPi matching the recovered IP flow identifying data FIDi. In the present example of Table 1, the matching packet data gateway identifying data PDG_IPi happens to be stored in the Flow Description column, on the same line in the binding cache as the recovered IP flow identifying data FIDi. From this information, the home agent HA selects the packet data gateway PDGi used on the uplink by the IP flow identified by FIDi.

Once the appropriate packet data gateway PDGi is selected, the data packet p is forwarded to this packet data gateway PDGi, by sending the packet p to the selected IP address PDG_IPi, then to the user equipment UE, during a final packet forwarding step 250, similar to previously-discussed forwarding step 150.

The routing method according to this first embodiment provides the advantage of a faster processing, since the packet data gateway is selected by a direct matching operation in the home agent binding cache.

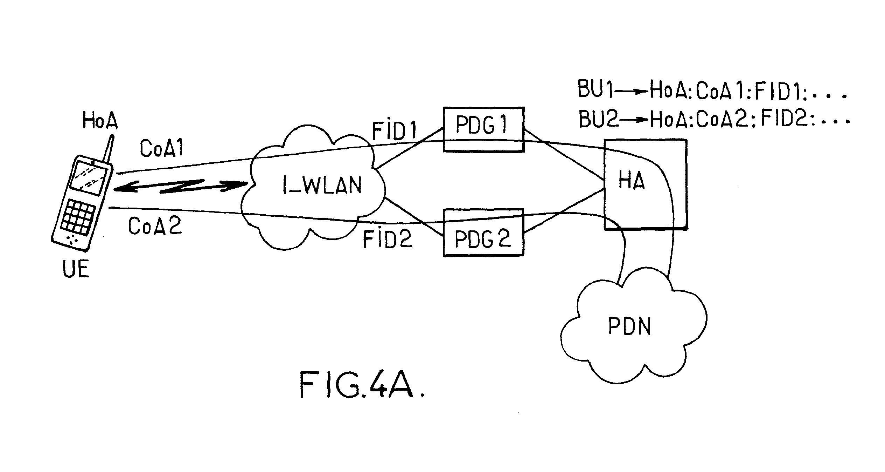

Figure 4A depicts the network system using a downlink IP packet routing method in accordance with a second embodiment of the present invention.

In this second embodiment, the remote IP address of the user equipment UE, assigned during I-WLAN service access with W-APN described in 3GPP TS 23.234 technical specification, is used.

According to this 3GPP TS 23.234 technical specification, during an I-WLAN attachment, the user equipment UE acquires a local IP address from the I-WLAN access network. Also, during I-WLAN service access with W-APN, the user equipment UE is assigned with a remote IP address by the packet data gateway in Home Public Land Mobile Networks or Visited Public Land Mobile Networks, or by an external IP network.

The remote IP address can be assigned statically or dynamically by the packet data gateway selected by the user equipment UE for the W-APN. The remote IP address is the address used by the data packet encapsulated inside the UE-to-PDG tunnel. The packet data gateway performs registration of the local IP address of the user equipment UE and binding of this address with the remote IP address of the user equipment UE. The user equipment UE uses the remote IP address as the Care-of Address CoA during binding registration with the home agent HA.

When the user equipment UE accesses several services with different W-APNs simultaneously, it is assigned with several remote IP addresses, each representing a specific service flow. In the present example with two IP flows, user equipment UE is assigned with a first remote IP address corresponding to a first Care-of Address CoA1, for the first specific service IP flow 1, and a second remote IP address corresponding to a second Care-of Address CoA2, for the second specific service IP flow 2.

In this second embodiment, these remote IP addresses can be used by the home agent HA to derive the specific packet data gateway PDGi to route a specific service flow. The process is described below:

Just like in the first embodiment, the user equipment UE sends Binding Update messages BU1 and BU2 to the home agent HA for registering each IP flow. These binding update messages BUi contain a certain amount of information and comprise flow-level routing information.

For each IP flow, this flow-level routing information comprises at least a Care-of Address parameter CoAi and a flow identifying parameter FIDi. Other parameters such as the user equipment Home Address HoA or a flow description field can also be included in the flow-level routing information. However, contrary to the first embodiment, the flow description field in the second embodiment does not need to contain the IP addresses of the packet data gateways.

These flow-level routing information parameters are stored in the home agent HA, for instance in its Binding Cache. A typical Binding Cache applicable to this second embodiment is shown in the following Table 2:

**Table 2: Binding Cache in Home Agent HA according to the second embodiment**

| **Care-of Address** | **Home Address** | **Flow Identifier** | **Flow Description** | **...** |
|---|---|---|---|---|
| CoA1 | HoA | FID1 | ... | ... |
| CoA2 | HoA | FID2 | ... | ··· |
| ... | ... | ... | ... | ··· |

Once again, in Table 2, the parameters pertaining to binding update message BU1 are stored in the first line, the parameters pertaining to binding update message BU2 are stored in the second line, and so on. Compared to Table 1, Table 2 does not contain any direct identification of the packet data gateway PDGi to be used on the downlink direction.

Like in the first embodiment, when receiving an incoming downlink packet p from the Packet Data Network PDN, the home agent derives the flow identifying data FIDi corresponding to the packet p by filtering some of its parameters which identify the IP flow to which the packet belongs. However, in this second embodiment, the home agent HA uses stored remote IP address of the user equipment, sent as the Care-of Addresses CoAi in the binding update messages BU1 and BU2, to identify individual packet data gateways PDGi which route individual service flows.

Here, the home agent HA has knowledge of the pools of remote IP addresses that belong to individual packet data gateways. Indeed, for each packet data gateway PDGi, there is a pool of remote IP addresses possibly used by the user equipment UE.

Therefore, the home agent HA uses the binding cache to match the flow identifying data FIDi recovered from the parameters of the incoming downlink packet p with the stored remote IP address CoAi to be used for the packet forwarding.

From this remote IP address CoAi and the knowledge of the pools of remote IP addresses, the home agent HA then identifies the specific packet data gateway PDGi to which the remote IP address CoAi belongs to. Thereafter, the home agent HA can forward the packet p to this specific packet data gateway PDGi.

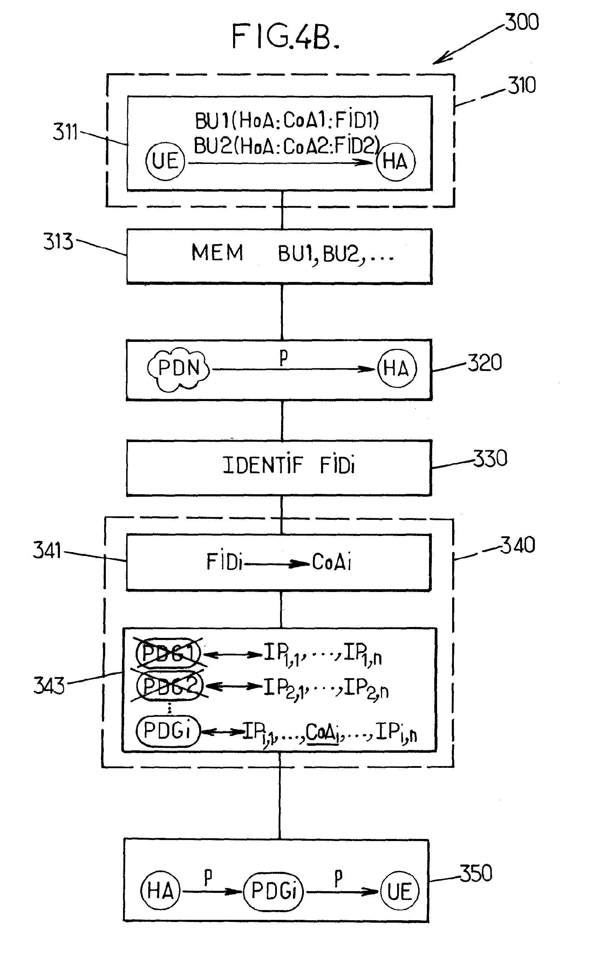

Figure 4B illustrates a downlink IP packet routing method 300 in accordance with a second embodiment of the present invention.

In this routing method 300, as explained previously in relation to figure 4A, flow-level routing information is stored in the home agent HA for each IP flow during an IP flow registration step 310.

This registration step 310 comprises a binding update message transmission sub-step 311 and a flow-level routing information memorization sub-step 313, similarly to registration step 210. The registration step 310 differs from registration step 210 only in that the binding messages BU1, BU2 do not need to contain a flow description field with an identification of the IP address of the packet data gateway, but comprises a Care-of Address field containing remote IP addresses CoA1 and CoA2 of the user equipment UE.

Once the different IP flows are registered in the home agent HA, the home agent HA is ready to receive an incoming downlink data packet p during a reception step 320 and to recover from at least some of the data packet parameters the IP flow identifying data FIDi during an identification step 330, similarly to reception step 220 and identification step 230.

Using the recovered IP flow identifying data FIDi, the home agent HA looks for the corresponding packet data gateway PDGi to be used for forwarding the data packet p to the user equipment UE during a packet data gateway selection step 340.

For that purpose, the home agent HA refers for instance to its binding cache as illustrated in Table 2 and matches the recovered IP flow identifying data FIDi with the corresponding stored remote IP address CoAi (on the same line in the Care-of Address column of Table 2), during a remote IP address matching sub-step 341.

Following this remote IP address matching sub-step 341, the home agent HA looks at the different pools of remote addresses corresponding to each packet data gateway PDGi during a packet data gateway matching sub-step 343, in order to find the specific packet data gateway PDGi matching the selected remote IP address CoAi, i.e. the specific packet data gateway PDGi having the specific pool of remote addresses containing the retrieved remote IP address CoAi. This specific packet data gateway PDGi is then selected for the forwarding of the incoming downlink data packet p.

Once the appropriate packet data gateway PDGi is selected, the data packet p is forwarded to this packet data gateway PDGi, then to the user equipment UE, during a final packet forwarding step 350, similar to previously-discussed forwarding step 150 or 250.

The routing method according to this second embodiment provides the advantage of requiring relatively less memory resources in the home agent HA as compared to the first embodiment, since the binding cache of the home agent HA does not need to store flow description field contents in the binding cache. Furthermore, the information regarding pools of IP addresses assigned to packet data gateways can be located anywhere in the network, for example, in the AAA or HSS (Home Subscriber Server), and not necessarily in the home agent HA, which allow for a decentralized approach to the packet data gateway selection.

The invention relates also to a network server able to forward a downlink data packet p to a forwarding data packet gateway PDGi according to the above-described method. Such a network server can be for instance the home agent server HA connected to a PDN network and interfacing with an I-WLAN network.

For that purpose, t, the network server comprises memorising means for storing flow-level routing information received from a user equipment UE, flow identifying means for recovering IP flow identifying data FIDi from the content of a downlink data packet p and selecting means for selecting the forwarding data packet gateway PDGi to use among a plurality of forwarding packet data gateways.

The invention relates also to a network system comprising such a network server as previously described, a plurality of packet data gateways PDG1, PDG2, ..., PDGi connected to this network server and at least one user equipment UE having active IP flow connections with the network server through at least two active packet data gateways PDG1, PDG2 among said plurality of packet data gateways.

In such a network system, the user equipment UE is able to transmit flow-level routing information to the network server HA through the at least two active packet data gateways PDG1, PDG2 and to receive a downlink data packet p from the network server HA through one of the at least two active packet data gateways PDG1, PDG2 selected by the network server HA according to one of the above-described selection step 140, 240 or 340.

The invention also relates to a computer program product that is able to implement any of the method steps as described above when loaded and run on computer means of a communication device. The computer program may be stored/distributed on a suitable medium supplied together with or as a part of other hardware, but may also be distributed in other forms, such as via the Internet or other wired or wireless telecommunication systems.

While the invention has been illustrated and described in detail in the drawings and foregoing description, such illustration and description are to be considered illustrative or exemplary and not restrictive, the invention being not restricted to the disclosed embodiments. Other variations to the disclosed embodiments can be understood and effected by those skilled in the art in practicing the claimed invention, from a study of the drawings, the disclosure and the appended claims.

For instance, the downlink routing of a single data packet has been so far described. However, the present invention applies naturally to any number of downlink packets, for instance IP data packets being part of an IP flow.

Moreover, the above-mentioned embodiments focus on the case of an I-WLAN network using multiple packet data gateways for the routing of multiple IP flows. However, the data packet routing method of the present invention can be applied to any kind of network, where it is advantageous to use the same packet data gateway for both uplink and downlink communications between a user equipment and a server.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. Data packet routing method for transmitting a data packet (p) from a server (HA) to an user equipment (UE), wherein the data packet (p) is transmitted (150) through a forwarding data packet gateway (PDGi) selected among a plurality of packet data gateways (PDG1, PDG2), **characterised in that** the forwarding data packet gateway (PDGi) is selected (140) in accordance with flow-level routing information stored in the server (HA) and IP flow identifying data (FIDi) recovered (130) from the content of said data packet (p).

2. Data packet routing method according to claim 1, **characterised in that** the flow-level routing information is stored in the server (HA) during an IP flow registration step (110) initiated by the user equipment (UE).

3. Data packet routing method according to claim 2, **characterised in that** the IP flow registration step (110) comprises, for each one of a plurality of IP flows to be registered in the server (HA), the transmission (211, 311) from the user equipment (UE) to the server (HA) of a respective binding update message (BU1, BU2) which comprises said flow-level routing information.

4. Data packet routing method according to any one of claims 1 to 3, wherein the flow-level routing information comprises IP flow identifying data (FID1, FID2) associated with packet data gateway identifying data (PDG_IP1, PDG_IP2) for each IP flow, the method being **characterised in that** the forwarding data packet gateway (PDGi) is selected (240) in accordance with the packet data gateway identifying data (PDG_IPi) matching the IP flow identifying data (FIDi) recovered from the data packet (p) content.

5. Data packet routing method according to claim 4, wherein a DSMIPv6 protocol is used by the user equipment (UE) and the server (HA), **characterised in that** the packet data gateway identifying data (PDG_IPi) is included into the flow description field of the respective binding update message (BU1,BU2) according to a DSMIPv6 extension.

6. Data packet routing method according to any one of claims 1 to 3, wherein the flow-level routing information comprises IP flow identifying data (FID1, FID2) associated with Care-of Address data (CoA1, CoA2) for each IP flow, the method being **characterised in that** the server (HA) selects (340) the forwarding data packet gateway (PDGi) in accordance with the Care-of Address data (CoAi) matching the IP flow identifying data (FIDi) recovered from the data packet (p) content.

7. Data packet routing method according to claim 6, wherein each packet data gateway (PDGi) among the plurality of packet data gateways (PDG1, PDG2) is associated to at least one remote IP address, the method being **characterised in that** the selected forwarding data packet gateway (PDGi) is the data packet gateway associated with an IP address matching (343) the Care-of Address data (CoAi) corresponding (341) to the IP flow identifying ata (FIDi) recovered (330) from the data packet (p) content.

8. Data packet routing method according to claim 7, **characterised in that** the Care-of Address data (CoAi) is assigned by a packet data gateway selected by the user equipment during I-WLAN service access with W-APN.

9. Data packet routing method according to any one of claims 1 to 8, **characterised in that** the IP flow identifying data (FIDi) is recovered (130) by filtering at least one specific parameter contained in said data packet (p).

10. Data packet routing method according to claim 9, wherein said data packet (p) comprises a source IP address and/or subnet mask, a destination IP address and/or subnet mask, a source port, a destination port and a protocol number, the method being **characterized in that** the IP flow identifying data (FIDi) is recovered (130) by filtering at least said source IP address and/or subnet mask, destination IP and/or subnet mask, source port, destination port and protocol number.

11. Network server (HA) for forwarding a downlink data packet (p) to a forwarding packet data gateway (PDGi), the network server being **characterised in that** it comprises memorising means for storing flow-level routing information received from a user equipment (UE), flow identifying means for recovering IP flow identifying data (FIDi) from the content of said downlink data packet (p) and selecting means for selecting the forwarding packet data gateway (PDGi) among a plurality of forwarding packet data gateways (PDG1, PDG2), the network server (HA) being adapted to carry out the steps of a data packet routing method according to any one of claims 1 to 8.

12. Network system comprising a network server (HA) according to claim 11, a plurality of packet data gateways connected to said network server and at least one user equipment (UE) communicating with at least two active packet data gateways (PDG1, PDG2) among said plurality of packet data gateways, wherein the user equipment (UE) is able to transmit flow-level routing information to the network server (HA) through said one of the at least two active packet data gateways (PDG1, PDG2) and to receive a downlink data packet (p) from the network server (HA) via said one of the at least two active packet data gateways (PDG1, PDG2) selected by the network server (HA).

13. Computer program product for implementing the data packet routing method according to any of the claims 1 to 10, when loaded and run on computer means of a network element.
